# EUROPEAN PATENT SPECIFICATION

(11) **EP 1 044 831 B1**
(45) Date of publication and mention of the grant of the patent: **16.06.2004**
(21) Application number: 99201147.8
(22) Date of filing: 14.04.1999
(51) Int. Cl.: B60D 1/02

(54) **Tow hitch for vehicles, particularly for agricultural tractors comprising a positioning pin having safety locking means**
Anhängevorrichtung für Fahrzeuge, insbesondere für landwirtschaftliche Schlepper mit einer Sicherheitsverriegelung, versehenen mit einem Positionierstift.
Attelage pour véhicules, en particulier pour tracteurs agricoles, muni d'une broche de positionnement pourvu d'un verrouillage de sécurité

(43) Date of publication of application: 18.10.2000
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- EP-A- 0 650 857
- EP-A- 0 823 343
- DE-A- 2 004 363
- DE-A- 2 008 812
- DE-B- 1 580 105
- US-A- 2 945 411

## Description

The present invention relates to an improved tow hitch of the type indicated in the preamble of claim 1 which follows.

Recent standards have established various requirements which have to be satisfied by tow hitches for agricultural vehicles in order to ensure the safety of persons even in cases of unusual and chance events, such as, for example, the overturning onto one side of a trailer towed by a tractor. In particular, it is required that the hitch be able to permit axial rotation of the tow eye of the trailer coupled thereto through at least 90° on both sides about the longitudinal towing axis when a predetermined overturning couple is exceeded.

The present applicant has already developed a tow hitch that satisfies those requirements with an innovative solution described in patent EP 0650857. The known tow hitch is also advantageously integrated in a system for adjusting its height, which has likewise been innovatively developed by the present applicant and described in patent EP 0667252. This tow hitch has also been provided with sensors for security reasons as disclosed in EP 0 823 343.

Although the above-mentioned tow hitch of known type satisfies per se the safety requirements mentioned above, a certain attention or experience is nevertheless necessary on the part of users when they are carrying out the operation of coupling the locking pin of the tow eye of a trailer, in order to avoid a situation where incorrect orientation of the pin could preclude the safety provided by the hitch of the above-mentioned known type. That need is particularly felt in cases where the pin used is of the more simple type which is inserted manually, or of the semi-automatic type with quick coupling, which can be effected, for example, directly from the driver's cab in the case of small tractors.

DEP 2 004 364 discloses a tow hitch with an appendage of a locking pin which can be inserted in holes provided on the upper wall of the tow hitch in order to precisely define locked correct orientation of the pin.

As far as the applicant knows, the general problem indicated above has not hitherto found an effective solution which is at the same time simple and economical. The object of the present invention is therefore to provide an improved tow hitch which enables a user to position correctly a pin for locking the tow eye of a trailer, ensuring that the pin remains constrained in positions of safety and non-interference with the tow unit if the hitch rotates through at least 90° on both sides about the longitudinal towing axis.

Another object of the invention is to provide a tow hitch in which incorrect positioning of the pin is immediately detectable by a user.

A further object of the invention is to produce a hitch of the type indicated above which is economical to manufacture, can be used in a simple and intuitive manner even by non-expert or careless users, which ensures long-term safety and efficiency even under difficult conditions of use, and, finally, which does not require particular attention to maintenance.

Another object of the invention is to provide a tow hitch which can be used either with a manual pin or with a quick-coupling semi-automatic pin.

In order to achieve the objects indicated above, the invention relates to a tow hitch of the type indicated in the preamble of the present description, having the characteristics indicated in the claims which follow.

Other characteristics and advantages will become clear from the following detailed description of a preferred embodiment, with reference to the appended drawings which are given purely by way of non-limiting example and in which:
- Figure 1 is a perspective view of a tow hitch produced in accordance with the present invention, comprising a manual pin inserted in the correct position,
- Figure 2 is a plan view of a tow unit comprising the tow hitch of Figure 1, without a pin for the sake of clarity, mounted on a structure for adjusting its height,
- Figure 3 is a sectional side view of the tow hitch of Figure 1, illustrating the correct and incorrect insertion positions of a manual pin,
- Figure 4 is a sectional side view similar to Figure 3, illustrating the correct and incorrect insertion positions of a quick-coupling semi-automatic pin, and
- Figure 5 is a partially sectional side view of a further example of a semi-automatic pin inserted in the correct position.

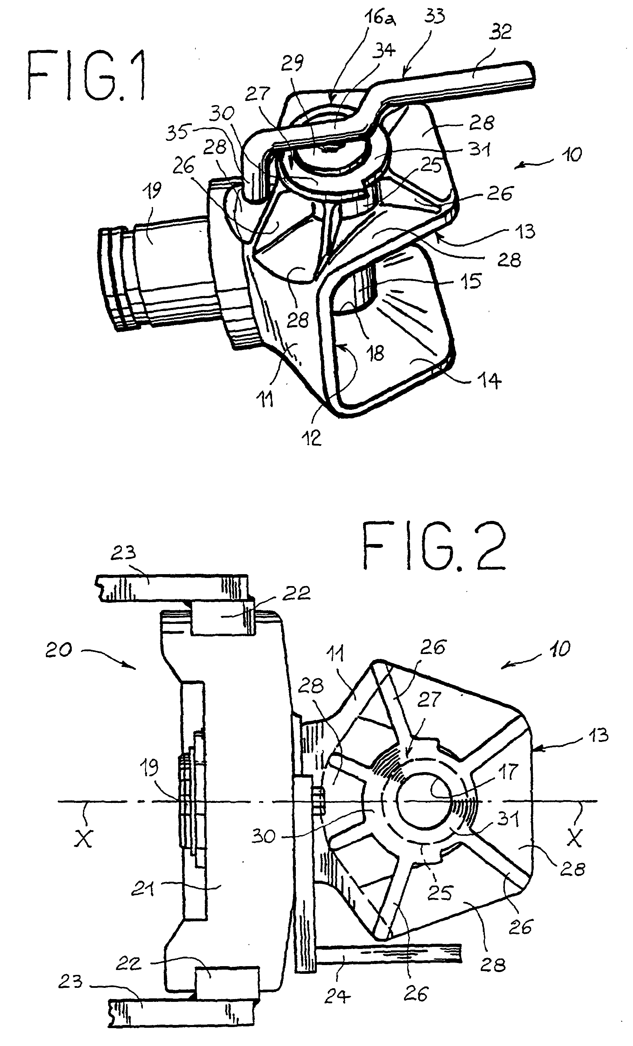

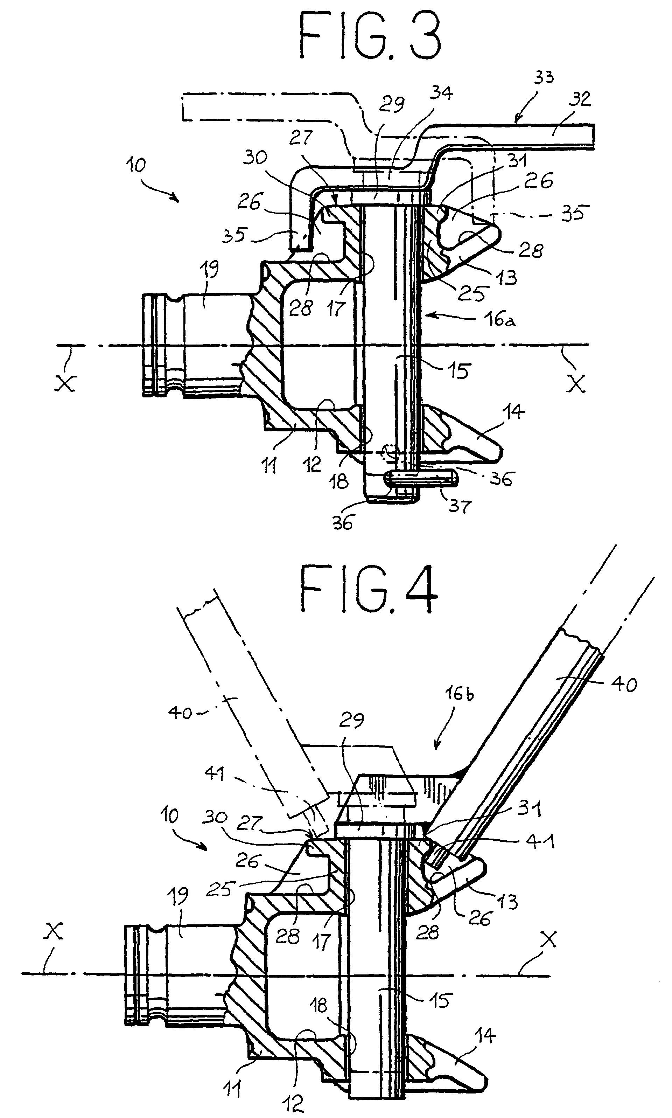

Referring now to Figure 1, a tow hitch 10 comprises a main body 11 having a mouth 12 defined by an upper lip 13 and a lower lip 14. The mouth 12 is to receive, in use, the tow eye of a trailer which is locked by a cylindrical body 15 of a pin which will here be referred to generally by the reference numeral 16, and which, especially in the example of Figures 1 and 3, is a manual pin 16a, while in the example of Figure 4 it is a semi-automatic pin 16b. The pin 16 is inserted into coaxial holes 17, 18 formed in the upper lip 13 and in the lower lip 14, respectively. A shank 19 for mounting the tow hitch 10 on a tractor extends from the main body 11, behind the mouth 12.

Figure 2 shows an example of the mounting of the tow hitch on an adjusting structure 20 of known type, by means of which it is possible to adjust the height of the hitch. The adjusting structure 20 comprises a carriage 21 which is slidable on a pair of guides 22 mounted on a rear frame 23 of the tractor. A control lever 24 enables the carriage 21 to be locked selectively at a determined height on the guides 22. The shank 19 is mounted on the carriage 21 to be rotatable about a longitudinal axis X-X. Known locking means, the characteristics of which do not fall within the scope of the present invention and which are therefore not described in detail, block the rotation of the tow hitch 10 about the longitudinal axis X-X as long as a couple exceeding a predetermined value is not applied to the hitch, for example caused by the accidental overturning of a towed trailer.

Extending in the region of the hole 17 in the upper lip 13 is a tubular support 25 for connection to the pin 16, from which support there extend, in a radial direction, stiffening ribs 26 which define a plurality of radial recesses, the base 28 of which is constituted by the upper surface of the upper lip 13. The upper end of the tubular support 25 widens to form an annular bearing disc 27 for a head 29 of the pin 16. The annular disc 27 has a radially widened portion 30 which extends symmetrically relative to a longitudinal plane over an overall extent preferably greater than 180°. The remaining portion of the annular disc 27, which is oriented towards the mouth 12 of the tow hitch, defines a step 31, the function of which will be described hereinafter.

The divergent configuration of the upper 13 and lower 14 lips forming the mouth 12 causes the radial recesses around the tubular support 25 to be deeper in the vicinity of the shank 19 and to become gradually shallower the further they are away from the shank 19. The depth of the radial recesses is here intended to mean substantially the distance between the base 28 and the annular disc 27.

The manual pin 16a, illustrated in Figures 1 and 3, comprises a handle 32 constituted preferably, but not in a limiting manner, by the end of a bent bar 33, a central portion 34 of which is secured, for example, by welding, to the head 29 of the pin. At the end remote from the handle 32, the bar 33 is further bent downwards through approximately 90° to form a positioning appendage 35. At the lower end of the body 15 of the pin 16a is a transverse hole 36 for the insertion of a split pin 37 or peg or other such member which prevents the pin 16a from coming out when a trailer is being towed.

When the tow hitch 10 is used with the manual pin 16a, after having inserted the tow eye of a trailer in the mouth 12, it is possible to insert the pin 16a into the tubular support 25 through the hole 17 and the tow eye, until it reaches the hole 18 in the lower lip 14. The large space between the handle 32 and, respectively, the upper lip 13 and the annular disc 27 prevents accidents to the fingers of an operator inserting the pin 16a.

If the pin 16a is inserted with the correct orientation, illustrated in Figure 1 and, with a continuous line, in Figure 3, the appendage 35 of the pin is accommodated in one of the radial recesses closer to the shank 19 which have a depth greater than the length of the appendage 35 which therefore remains at a distance from the base 28 when the head 29 of the pin rests on the annular disc 27. In that position, the transverse hole 36 formed at the lower end of the pin 16a is completely open below the lower lip 14 for the insertion of the split pin or peg 37.

If, on the other hand, the pin 16a is inserted with an incorrect orientation, illustrated by way of example in Figure 3 with a broken line, the appendage 35 strikes the base 28 of one of the radial recesses of shallower depth, keeping the head 29 of the pin 16a raised relative to the annular disc 27. In that case, the insufficient penetration of the pin 16a into the hitch 10 does not (completely) open the transverse hole 36 below the lower lip 14, thus making it impossible to insert the split pin or the peg 37. The user is thus immediately alerted to the incorrect positioning of the pin 16a. A check to establish the reasons for the incorrect insertion, clearly demonstrated by the interference between the appendage 35 and the upper lip 13 of the hitch, can be effected immediately even in the case of a non-expert user who will be led, also purely intuitively, to rotate the pin 16a in order to insert the appendage 35 correctly in a deeper radial recess. When the pin 16a is inserted correctly in the hitch 10 and is locked axially by means of the split pin 37, the ribs 26 which delimit the radial recesses laterally in any case limit the ability of the pin 16a to rotate about its axis, thus constituting a further safety measure against accidental movement of the pin 16a into a position in which the handle 32 could unfortunately interfere, if the trailer overturns, with the rear structure 23 of the tractor, and in particular with the control lever 24 or with the guides 22 if a structure 20 for adjusting the height of the tow hitch of the same type as the structure shown in Figure 2 is used.

As shown in Figure 4, a semi-automatic pin 16b with quick coupling, which can be effected, for example, directly from the driver's cab in the case of small tractors, can be coupled to the tow hitch 10 described above. Normally, such semi-automatic pins 16b comprise an inclined rod 40, the lower end of which is secured in a projecting manner to the head 29 of the pin. A control means of known type (not shown in the drawings), for example a push-button, slide or similar type of control, is arranged at the top of the inclined rod 40 and brings about the return of a small axially retractable piston 41 projecting from the lower end of the rod 40, against the action of a resilient element, for example a helicoidal spring, which is mounted in the rod to maintain the small piston 41 in a pulled-out position.

If the semi-automatic pin 16b is inserted with the correct orientation, illustrated with a continuous line in Figure 4, the small piston 41 becomes coupled to a tooth 31 formed by the annular disc 27, preventing the pin 16b from coming out of the hitch as long as the user does not act deliberately on the control means arranged at the top of the rod 40.

If, on the other hand, the semi-automatic pin 16b is inserted with an incorrect orientation, illustrated by way of example in Figure 4 with a broken line, the small piston 41 is not able to go beyond the tooth formed by the radially widened portion 30 of the annular disc 27 in order to be coupled thereto. In that case the action of the resilient element, arranged inside the rod 40, on the small piston 41 brings about the extension thereof and the consequent raising of the head of the pin 16b. This state of incorrect insertion of the pin 16b is immediately detectable by a user who tries to pull the rod 40 upwards without operating the device for moving back the small piston 41. In addition, while in the correct insertion position the rotation of the pin 16b is limited by the presence of the ribs 26, in the incorrect insertion position the pin 16b is free to rotate about its own axis. The user can thus always check that the pin has been inserted correctly by trying to rotate the pin 16b by means of the rod 40.

In that case also, the correct insertion of the pin 16b also ensures its correct orientation which keeps the rod 40 away from the rear structure 23 of the tractor, and in particular, in cases where an adjusting structure 20 of the type shown in Figure 2 is used, keeps it away from the control lever 24 and from the guides 22, in such a manner as to permit the safe and non-interfering rotation of the tow hitch 10 about its longitudinal axis X-X if necessary.

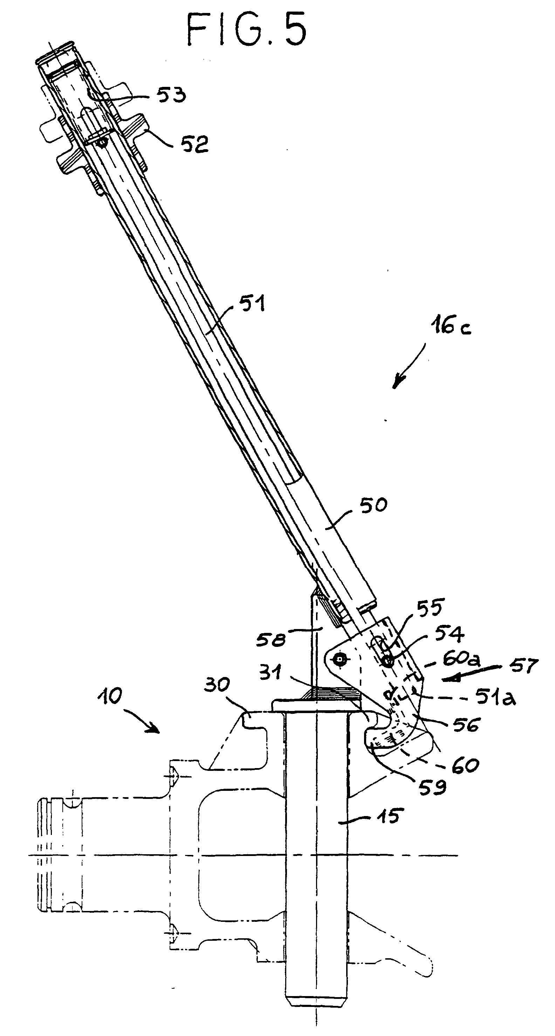

Figure 5 shows an alternative example of pin 16c of the quick-coupling semi-automatic type, which is likewise, like the pin 16b of Figure 4, operable directly from the driver's cab, especially in the case of small tractors. The semi-automatic pin 16c comprises an inclined tube 50 inside which is slidably mounted a control rod 51, the upper end of which is connected to a slider 52 and is opposed resiliently by a spring 53. The lower end 51a of the control rod 51 projects to the outside of the tube 50, and a pin 54, which is mobile inside slots 55 formed in opposing cheeks 56 of a coupling member 57, extends through it transversely. The coupling member 57 is rotatably articulated to a shank 58 projecting from the top of the body 15 of the pin, and is also provided with hooked appendages 59 suitable for coupling beneath the step 31 of the hitch 10, but not beneath the widened portion 30.

Interposed between the two cheeks 56 of the coupling member 57 is a spacer 60 having a wall 60a which, in the locked state of the pin 16c, runs parallel and side by side with at least one portion of the lower end 51a of the control rod 51.

By acting on the slider 52, the rod 51 is pulled by overcoming the resilient opposition of the spring 53 in such a manner as to cause the coupling member to rotate relative to the shank 58, and consequently the hooked appendages 59 to be disengaged from the step 31. The release of the slider 52 enables the spring 53 to push the rod 51 downwards and permits the coupling of the hooked appendages 59 below the step 31 of the hitch 10. If, however, the semi-automatic pin 16c is in an impermissible position, for example, rotated through 180° relative to the upright axis of the body 15 of the pin, the hooked appendages 59 do not succeed in coupling below the widened portion 30, and not only is the pin not locked but in fact it tends to be raised, thus also indicating visually that coupling has not occurred correctly.

In the locked state of the semi-automatic pin 16c, illustrated in Figure 5, the wall 60a of the spacer 60 is arranged side by side with a portion of the lower end 51a of the control rod 51. The interference between the lower end 51a and the wall 60a prevents any rotation, even accidental rotation, of the coupling member 57 about the shank 58, as long as the control rod is kept lowered by the spring 53 and therefore, in short, as long as it is not decided deliberately to act on the slider 52 to unlock the semi-automatic pin 16c.

Owing to the interaction of the hooked appendages 59 with the body of the hitch 10, and in particular with the step 31, and even more so by means of the cooperation of the lower end 51a of the control rod 51 with the coupling member, and in particular with the spacer 60, the semi-automatic pin 16c enables a high degree of security to be achieved against any possibility of inadvertent or accidental uncoupling of the pin, even when the hitch and the pin are subject to severe shaking, vibration and stress.

As will be appreciated from the above detailed description of preferred embodiments, the tow hitch of the present invention enables even non-expert persons to insert correctly, in a position of safety and non-interference, a pin for locking the tow eye of a trailer. Correct insertion is immediately apparent and it is intuitive to move an incorrectly inserted pin into the correct position. The technical measures adopted to achieve this result, which fully respects the most restrictive standards in this field, nevertheless have a decidedly limited, or even negligible, impact on production costs and on the ease of manufacture of the tow hitch. Furthermore, the tow hitch of the present invention can be used either with a manual pin or with a semi-automatic pin and, equally, it can be mounted on a tractor either in a fixed position or associated with a system for adjusting its height.

## Claims

1. An improved tow hitch, comprising a main body (11) having an upper lip (13) and a lower lip (14) defining a mouth (12) suitable for receiving, in use, a tow eye of a trailer, and a locking pin (16a, 16b) comprising a cylindrical body (15) suitable for being inserted with general freedom of axial orientation in coaxial holes (17, 18) formed in the upper lip and in the lower lip, respectively, in order to pass through the mouth (12), the locking pin (16a, 16b) comprising an appendage (35, 41) which, for an arc of predetermined amplitude of the axial orientation of the cylindrical body (15) of the pin (16a, 16b), interferes with walls (28, 30) of the main body (11) of the tow hitch, preventing complete insertion of the locking pin (16a, 16b), the upper lip (13) comprising an external wall (28) and an annular disc (27) which is raised relative to the external wall (28) and which is arranged for bearing a head (29) of the pin when the pin is completely inserted, **characterised in that** the annular disc (27) defines distinct incorrect and correct insertion positions of the pin, the appendage (35, 41) interfering with a first portion (30) of the annular disc (27) defining incorrect insertion positions of the pin, said interference of the appendage giving the cylindrical body (15) of the pin a limited freedom of axial orientation when said body is completely inserted in the tow hitch in a correctly oriented insertion position.

2. An improved tow hitch according to claim 1, **characterised in that** the annular disc (27) comprises a second portion (31) beneath which the appendage (41) is locked in order to keep the pin (16b) in a correctly oriented locking position.

3. An improved tow hitch according to claim 2, **characterised in that** the appendage (41) is selectively retractable by means of control means in opposition to resilient pressure means which keep the appendage in the pulled-out position.

4. An improved tow hitch according to claim 3, **characterised in that** the pin (16b) is a quick-coupling semi-automatic pin comprising an inclined rod (40) which is secured in a projecting manner to the head (29) of the pin, the appendage (41) projecting from the end of the inclined rod (40) closest to the head (29) of the pin.

5. An improved tow hitch according to claim 1, **characterised in that** the upper lip (13) also comprises rib-like walls (26) which extend radially from the annular disc (27) to define a plurality of radial recesses, the rib-like walls (26) limiting the freedom of axial orientation of the cylindrical body (15) when said body is completely inserted in the tow hitch in a correctly oriented position.

6. An improved tow hitch according to claim 2, **characterised in that** the pin (16c) is a quick-coupling semi-automatic pin comprising an inclined tube (50) secured in a projecting manner to a head shank (58) of the pin, the appendage (59) being a hooked portion of a coupling member (57) articulated to the head shank (58), the appendage (59) being selectively retractable by means of control means (51, 52) opposed by resilient pressure means (53).

7. An improved tow hitch according to claim 6, **characterised in that** the control means (51) comprise an appendage (51a) which cooperates with abutment means (60, 60a) associated with the appendage (59) to ensure that the semi-automatic pin (16c) is kept securely locked.

## Patentansprüche

1. Verbesserte Anhängerkupplung mit einem Hauptkörper (11), der eine obere (13) und eine untere (14) Lippe aufweist, die eine Mündung (12) definieren, die sich dazu eignet, im Gebrauch eine Schleppöse eines Anhängers aufzunehmen, und einem Sperrbolzen (16a, 16b), der einen zylindrischen Körper (15) aufweist, der sich dazu eignet, mit allgemeiner Freiheit der axialen Ausrichtung in koaxiale Löcher (17, 18) eingeführt zu werden, die in der oberen bzw. in der unteren Lippe so ausgebildet sind, dass sie durch die Mündung (12) hindurch verlaufen, wobei der Sperrbolzen (16a, 16b) einen Ansatz (35, 41) umfasst, der über einen Bogen einer vorbestimmten Amplitude der axialen Ausrichtung des zylindrischen Körpers (15) des Bolzens (16a, 16b) behindernd an die Wände (28, 30) des Hauptkörpers (11) der Anhängerkupplung angreift und dadurch ein vollständiges Einführen des Sperrbolzens (16a, 16b) verhindert, wobei die obere Lippe (13) eine Außenwand (28) und eine ringförmige Scheibe (27) aufweist, die bezüglich der Außenwand (28) erhaben ist und zur Lagerung eines Kopfes (29) des Bolzens nach vollständigem Einführen des Bolzens angeordnet ist, **dadurch gekennzeichnet, dass** die ringförmige Scheibe (27) verschiedene nicht ordnungsgemäße und ordnungsgemäße Einführpositionen des Bolzens definiert, wobei der Ansatz (35, 41) behindernd an einen ersten Teil (30) der ringförmigen Scheibe (27) angreift, wodurch nicht ordnungsgemäße Einführpositionen des Bolzens definiert werden, und wobei dem zylindrischen Körper (15) des Bolzens durch das behindernde Angreifen des Ansatzes eine begrenzte Freiheit der axialen Ausrichtung verliehen wird, wenn der Körper in ,einer ordnungsgemäß ausgerichteten Einführposition vollständig in der Anhängerkupplung eingeführt ist.

2. Verbesserte Anhängerkupplung nach Anspruch 1, **dadurch gekennzeichnet, dass** die ringförmige Scheibe (27) einen zweiten Teil (31) umfasst, unter dem der Ansatz (41) verriegelt wird, um den Bolzen (16b) in einer ordnungsgemäß ausgerichteten Verriegelungsposition zu halten.

3. Verbesserte Anhängerkupplung nach Anspruch 2, **dadurch gekennzeichnet, dass** der Ansatz (41) mit Hilfe von Steuermitteln, die elastischen Druckmitteln, die den Ansatz in der ausgezogenen Position halten, entgegenwirken, gezielt zurückgezogen werden kann.

4. Verbesserte Anhängerkupplung nach Anspruch 3, **dadurch gekennzeichnet, dass** der Bolzen (16b) ein halbautomatischer Schnellkupplungsbolzen ist, der eine geneigte Stange (40) umfasst, die auf vorragende Weise am Kopf (29) des Bolzens befestigt ist, wobei der Ansatz (41) vom Ende der geneigten Stange (40) am nächsten zum Kopf (29) des Bolzens vorragt.

5. Verbesserte Anhängerkupplung nach Anspruch 1, **dadurch gekennzeichnet, dass** die obere Lippe (13) des Weiteren rippenförmige Wände (26) umfasst, die sich radial von der ringförmigen Scheibe (27) so erstrecken, dass sie mehrere radiale Aussparungen definieren, wobei die rippenartigen Wände (26) die Freiheit der axialen Ausrichtung des zylindrischen Körpers (15) begrenzen, wenn der Körper in einer ordnungsgemäß ausgerichteten Position vollständig eingeführt ist.

6. Verbesserte Anhängerkupplung nach Anspruch 2, **dadurch gekennzeichnet, dass** der Bolzen (16c) ein halbautomatischer Schnellkupplungsbolzen ist, der ein geneigtes Rohr (50) umfasst, das auf vorragende Weise an einem Kopfschaft (58) des Bolzens befestigt ist, wobei der Ansatz (59) ein hakenförmiger Teil eines am Kopfschaft (58) angelenkten Kupplungsglieds (57) ist, wobei der Ansatz (59) mittels Steuermitteln (51, 52), denen durch elastische Druckmittel (53) entgegengewirkt wird, gezielt zurückgezogen werden kann.

7. Verbesserte Anhängerkupplung nach Anspruch 6, **dadurch gekennzeichnet, dass** die Steuermittel (51) einen Ansatz (51a) umfassen, der mit Anstoßmitteln (60, 60a) zusammenwirkt, die dem Ansatz (59) zugeordnet sind, um zu gewährleisten, dass der halbautomatische Stift (16c) sicher verriegelt gehalten wird.

## Revendications

1. Attelage de remorquage amélioré, comportant un corps principal (11) ayant une lèvre supérieure (13) et une lèvre inférieure (14) définissant une embouchure (12) adaptée pour recevoir, en utilisation, un oeil de remorquage d'un tracteur, et une broche de verrouillage (16a, 16b) comportant un corps cylindrique (15) adapté pour être inséré avec une liberté d'orientation axiale générale dans des trous coaxiaux (17, 18) formés dans la lèvre supérieure et dans la lèvre inférieure, respectivement, pour passer à travers l'embouchure (12), la broche de verrouillage (16a, 16b) comportant un appendice (35, 41) qui, pour un arc d'une amplitude prédéterminée de l'orientation axiale du corps cylindrique (15) de la broche (16a, 16b), interfère avec des parois (28, 30) du corps principal (11) de l'attelage de remorquage, en empêchant une insertion complète de la broche de verrouillage (16a, 16b), la lèvre supérieure (13) comportant une paroi extérieure (28) et un disque annulaire (27) qui est élevé par rapport à la paroi extérieure (28), et qui est agencé pour supporter une tête (29) de la broche lorsque la broche est complètement insérée, **caractérisé en ce que** le disque annulaire (27) définit des positions d'insertion incorrectes et correctes distinctes de la broche, l'appendice (35, 41) interférant avec une première partie (30) du disque annulaire (27) définissant des positions d'insertion incorrectes de la broche, ladite interférence de l'appendice donnant au corps cylindrique (15) de la broche une liberté d'orientation axiale limitée lorsque ledit corps est complètement inséré dans l'attelage de remorquage dans une position d'insertion orientée correctement.

2. Attelage de remorquage amélioré selon la revendication 1, **caractérisé en ce que** le disque annulaire (27) comporte une seconde partie (31) en dessous de laquelle est verrouillé l'appendice (41), afin de maintenir la broche (16b) dans une position de verrouillage orientée correctement.

3. Attelage de remorquage amélioré selon la revendication 2, **caractérisé en ce que** l'appendice (41) peut être rétracté de manière sélective par l'intermédiaire de moyens de commande en opposition à des moyens de pression élastiques qui maintiennent l'appendice dans la position retirée.

4. Attelage de remorquage amélioré selon la revendication 3, **caractérisé en ce que** la broche (16b) est une broche semi-automatique à couplage rapide comportant une tige inclinée (40) qui est fixée d'une manière faisant saillie sur la tête (29) de la broche, l'appendice (41) faisant saillie à partir de l'extrémité de la tige inclinée (40) la plus proche de la tête (29) de la broche.

5. Attelage de remorquage amélioré selon la revendication 1, **caractérisé en ce que** la lèvre supérieure (13) comporte également des parois analogues à une nervure (26) qui s'étendent radialement à partir du disque annulaire (27) pour définir une pluralité d'évidements radiaux, les parois analogues à une nervure (26) limitant la liberté d'orientation axiale du corps cylindrique (15) lorsque ledit corps est complètement inséré dans l'attelage de remorquage dans une position orientée correctement.

6. Attelage de remorquage amélioré selon la revendication 2, **caractérisé en ce que** la broche (16c) est une broche semi-automatique à couplage rapide comportant un tube incliné (50) fixé d'une manière faisant saillie sur une queue de tête (58) de la broche, l'appendice (59) étant une partie crochue d'un élément de couplage (57) articulé sur la queue de tête (58), l'appendice (59) pouvant être'rétracté de manière sélective par l'intermédiaire de moyens de commande (51, 52) opposés à des moyens de pression élastique (53).

7. Attelage de remorquage amélioré selon la revendication 6, **caractérisé en ce que** les moyens de commande (51) comportent un appendice (51a) qui coopère avec des moyens de butée (60, 60a) associés à l'appendice (59) pour garantir que la broche semi-automatique (16c) est maintenue verrouillée de manière sûre.
